# EUROPEAN PATENT SPECIFICATION

(11) **EP 4 279 051 B1**
(45) Date of publication and mention of the grant of the patent: **18.09.2024**
(21) Application number: 22174130.9
(22) Date of filing: 18.05.2022
(51) Int. Cl.: A61G 3/08

(54) **BASE FLOOR PART FOR CARRYING A WHEELCHAIR AND AUTOMOBILE COMPRISING A BASE FLOOR PART FOR CARRYING A WHEELCHAIR**
BODENTEIL ZUM TRAGEN EINES ROLLSTUHLS UND KRAFTFAHRZEUG MIT EINEM BODENTEIL ZUM TRAGEN EINES ROLLSTUHLS
PARTIE DE PLANCHER DE BASE POUR TRANSPORTER UN FAUTEUIL ROULANT ET AUTOMOBILE COMPRENANT UNE PARTIE DE PLANCHER DE BASE POUR TRANSPORTER UN FAUTEUIL ROULANT

(43) Date of publication of application: 22.11.2023
(60) Divisional application: 24193372.0
(73) Proprietor: API CZ s.r.o., 391 76 Slapy (CZ)
(72) Inventor: Svec, Jiri, Drazice (CZ); Bartos, Miroslav, Tabor (CZ)
(74) Representative: Schmid, Nils T.F.

(56) References cited:
- EP-A1- 3 476 379
- EP-B1- 2 293 755
- US-A- 5 137 413
- US-A1- 2020 129 350
- US-A1- 2022 047 437

## Description

The present invention relates to a base floor part for carrying a wheelchair adapted to be connected to a body of an automobile and to an automobile comprising a base floor part for carrying a wheelchair. The invention also relates to a system comprising such a base floor part or such an automobile and a wheelchair.

In order to make vehicles suitable for wheelchair users, the OEM-side-mounted vehicle floor is often removed to the extent that essentially only the vehicle body, including the vehicle body floor and vehicle body side parts, remains. A separately produced vehicle floor is then mounted on the vehicle body. In comparison to the OEM-sided vehicle floor, the replacement floor is designed in such a way that considerably more space is available, especially in the vertical direction, so that even a wheelchair user can sit upright on the wheelchair in the vehicle interior and is safely accommodated. Usually, vehicle ramps are attached to the replacement floor in such a way that they can still be swivelled so that the wheelchair user can easily enter and leave the vehicle.

With growing environmental awareness, it gets more and more important to make electrically powered vehicles suitable and accessible for wheelchairs. Usually electrically powered vehicles have more components that need to be considered when installing a base floor part for carrying the wheelchair in the vehicle. In particular, the battery for providing the driving force of the electrically powered vehicle can be very large. EP 3 476 379 A1 proposes a method for installing a wheelchair bay in an electrically powered vehicle, wherein the wheelchair bay is located behind the battery in the longitudinal direction of the vehicle.

As there are many different types of vehicles, there are vehicles that comprise a smaller rear cargo space and/or a larger battery than the vehicle in EP 3 476 379 A1, so that with the method proposed in EP 3 476 379 A1 it is not possible to install a base floor part for carrying a wheelchair in those vehicles behind the battery.

US 5,137,413 A discloses an expanded interior space and improved access mini-van.

EP 2 293 755 A1 discloses a foldable ramp allowing an invalid wheelchair passenger enter into a vehicle.

It is an object of the present invention to overcome the disadvantages of the state of the art, in particular to provide a base floor part that uses the installation space available for the base floor part in a more efficient way so that it can be implemented in a larger number of vehicles, in particular in vehicles with little installation space for the base floor part such as electrically powered vehicles.

This object is solved by the subject matter of the independent claim 1.

According to an example embodimentof the present invention, a base floor part for carrying a wheelchair is provided. The base floor part is adapted to be connected to a body of an automobile, in particular an electrically powered automobile. The connection between the base floor part and the automobile body can be realized for example by gluing and/or screwing. The base floor part can be adapted to replace the OEM-sided manufactured vehicle floor in order to convert the automobile into a wheelchair accessible automobile. Therefore, the base floor part can comprise predefined attachment sections configured in design such that they may be attached to corresponding attachment sections of the automobile body where the OEM-sided original vehicle floor has been attached to. In particular, the base floor part can be designed and configured such that a wheelchair can be stored on it in the rear cargo space of the automobile. The base floor part can be made of plastic or composite material, in particular fiberglass, and/or can be manufactured by injection or resin tranfer molding. For example, a mold may be used for the fiberglass material and vaccum to fill the mold. It is also possible to manufacture the base floor part from sheet metal on a press.

The base floor part according to the first aspect is adapted to be connected to an automobile that comprises a battery for providing at least part of a driving force of the automobile, such as an electric automobile or a hybrid automobile. The battery for providing at least part of the driving force, that can also be referred to as tracktion battery, can provide a high voltage of about 400 to 1000 V. Further the tracktion battery can have a high capacity of 50 to 100 kWh. The tracktion battery can be very heavy and way up to 400 kg. By these features, the battery for providing the driving force can be easily distinguished from other batteries of the automobile, such as a conventional automobile battery having a capacity of about 0,85 kWh, as well as additional batteries of the automobile and/or a wheelchair access system connected to the base floor part, such as a battery of a lifting mechanism to pull or lift the wheelchair onto the base floor part. It should be clear that the term battery within the meaning of the present invention refers to the tracktion battery for providing at least part of a driving force of the automobile and does not refer to other batteries that might be present in the automobile and/or the wheelchair access system.

The base floor part extends in a longitudinal direction, wherein a wheelchair can be pushed or driven onto the base floor part from a rear end in longitunidal direction of the base floor part. The longitudinal direction of the base floor part can extend in a horizontal direction. In an assembly state, in which the base floor part is connected to the automobile body, the longitudinal direction of the base floor part is preferably arranged parallel to a longitudinal direction of the automobile. The longitudinal direction of the automobile is defined by the driving direction of the automobile.

The base floor part is designed in such a way, that it can be arranged at least partly above the battery. In the assembly state, the base floor part and the battery overlap in a vertical direction over a certain distance in longitudinal direction of the base floor part and/or the automobile. In other words, is the base floor part within this distance arranged above the battery in vertical direction. By overlapping the base floor part and the battery, the base floor part can be installed in automobiles with a smaller rear cargo space and/or a bigger tracktion battery, because the base floor part can at least partly be installed in the installation space normally occupied by the battery. Another advantage is that the same base floor part can be used for different automobiles because the length of overlapping between the base floor part and the battery can be changed flexibly. In other words, the portion of the base floor part overlapping with the battery can be adapted without changing the base floor part. Further no modifications and/or relocation of the battery is necessary to install the base floor part in the automobile. Therefore, the base floor part according to the first aspect provides a cheap, flexibel and reliable way to install a base floor part in an automobile and at the same time enables to use the installation space in a very efficient way. The base floor part therefore makes it possible to make even automobiles with a small rear cargo space accessible for wheelchairs.

In another example embodiment, the base floor part comprises a substantially horizontal battery section, also called forward section. In longitudinal direction of the base floor part, the battery section can be arranged at the forward end of the base floor part. The battery section comprises a substantially horizontal top side and/or a substantially horizontal bottom side. Preferably both, the top side and the bottom side, are substantially horizontal, so that they extend parallel to each other. Hence, the battery section can have a substantially constant wall thickness, so that the battery section and the base floor part can be manufactured in an easy and cheap way. In this embodiment the base floor part is designed in such a way, that the horizontal battery section can be arranged at least partly above the battery.

In the invetion, the battery section has a length between 10 cm and 30 cm, preferably between 15 cm and 25 cm or about 20 cm. The base floor part can is designed in such a way, that the battery section can be arranged above the battery substantially over the whole length of the battery section, to provide a base floor part requiring minimal installation space.

According to another example embodiment of the present invention, that can be combined with the previous aspects and example embodiments, a base floor part for carrying a wheelchair is provided. The base floor part is adapted to be connected to a body of an automobile, in particular an electrically powered automobile. The connection between the base floor part and the automobile body can be realized for example by gluing and/or screwing. The base floor part can be adapted to replace the OEM-sided manufactured vehicle floor in order to convert the automobile into a wheelchair accessible automobile. Therefore, the base floor part can comprise predefined attachment sections configured in design such that they may be attached to corresponding attachment sections of the automobile body where the OEM-sided original vehicle floor has been attached to. In particular, the base floor part can be designed and configured such that a wheelchair can be stored on it in the rear cargo space of the automobile. The base floor part can be made of plastic or composite material, in particular fiberglass, and/or can be manufactured by injection or resin tranfer molding. For example, a mold may be used for the fiberglass material and vaccum to fill the mold. It is also possible to manufacture the base floor part from sheet metal on a press.

Wheelchairs in general comprise two large rear wheels and two smaller front wheels. Normally a wheelchair also comprises a seat for the wheelchair user and a foot rest, where the wheelchair user can place his feet. Often the foot rest is arranged forward of the front wheels and/or at least partly protrudes over the front wheels in forward direction. Comercially available wheelchairs often have a total length of 120 cm or in the case of electric wheelchairs a length of 130 cm from a forward end of the foot rest to a rearward end of the rear wheels. The width of commercially available wheelchairs can be between 58 cm and 72 cm.

The base floor part extends in a longitudinal direction, wherein a wheelchair can be pushed or driven onto the base floor part from a rear end in longitunidal direction of the base floor part. The longitudinal direction of the base floor part can extend in a horizontal direction. In an assembly state, in which the base floor part is connected to the automobile body, the longitudinal direction of the base floor part is preferably arranged parallel to a longitudinal direction of the automobile. The longitudinal direction of the automobile is defined by the driving direction of the automobile.

The base floor part according to invention comprises a wheelchair storage section configured for carrying the rear wheels and the front wheels of the wheelchair. With other words is the wheelchair storage section configured to completely carry the wheelchair, meaning that the front wheels and the rear wheels can be placed on the wheelchair storage section at the same time. Therefore, the wheelchair storage section has a length and a width large enough to carry all wheels of the wheelchair at the same time. In the longitudinal direction of the base floor part, the wheelchair storage section can be arranged at a rear end of the base floor part. A rear end of the wheelchair storage section can be connected for example to a ramp for enabling access for the wheelchair onto the wheelchair storage section.

According to the invention, a top side of the wheelchair storage section is inclined at an angle between 1% and 15% with respect to a horizontal direction. In particular, the wheelchair storage section can be inclined at an angle of less than 12%, 9% or 3% with respect to the horizontal direction. As the wheelchair storage section is configured to carry the front wheels and the rear wheels, the wheelchair is inclined at the same angle as the wheelchair storage section, when stored on the wheelchair storage section. With the inclined wheelchair storage section, it is possible to increase the effective length of the wheelchair storage section that can be used to store the wheelchair, in particular to carry the wheels of the wheelchair, within the same rear cargo space of the automobile, compared to a wheelchair storage section extending in horizontal direction. Hence, with the base floor part according to this aspect it is possible to make automobiles with smaller rear cargo space, for example because of a large tracktion battery in electrically powered automobiles, accessible for wheelchairs without the need to change the automobile body and without the need to change or relocate the tracktion battery of the automobile. With a smaller inclination angle the comfort for the wheelchair user can be increased but at the same time the effective length of the wheelchair storage section is reduced. The inventors of the present invention found out, that with an inclination angle between 1 and 15°, preferably less than 12%, 9% or 3% an optimum between cheap installation of the base floor part, efficient use of the available installation space and comfort for the wheelchair user can be reached.

According to an example embodiment, a bottom side of the wheelchair storage section is inclined at the same angle with respect to the horizontal direction as the top side of the wheelchair storage section. In this embodiment the top side and the bottom side extend parallel to each other, so that the wheelchair storage section has a substantially constant wall thickness. A base floor part according to this embodiment can be manufactured in an easy and cheap way and/or less material is required for manufacturing the base floor part.

According to another example embodiment, the top side of the wheelchair storage section has a constant inclination angle over the entire length of the wheelchair storage section. This way the wheechair can be pushed or driven onto the wheelchair storage section in an easy way without the need to overcome edges on the top surface between portions of the top surface with different inclination angles and at the same time the base floor part can be manufactured in an easy and cheap way. Additionally or alternatively, the bottom side of the wheelchair storage section has a constant inclination angle over the entire length of the wheelchair storage section.

According to a further example embodiment, the wheelchair storage section has a length that is shorter than a total length of the wheelchair, in particular shorter than 120 cm. In a preferred embodiment, the wheelchair storage section can have a length between 90 cm and 110 cm, preferably about 100 cm or 102 cm. In this embodiment the wheelchair storage section is adapted to carry the front and rear wheels of the wheelchair, while the footrest can be located outside of the wheelchair storage section at a forward end of the wheelchair storage section. With this embodiment a base floor part requiring minimal installation space is provided.

According to an aspect of the present invention, that can be combined with the previous aspects and example embodiments, a base floor part for carrying a wheelchair is provided. The base floor part is adapted to be connected to a body of an automobile, in particular an electrically powered automobile. The connection between the base floor part and the automobile body can be realized for example by gluing and/or screwing. The base floor part can be adapted to replace the OEM-sided manufactured vehicle floor in order to convert the automobile into a wheelchair accessible automobile. Therefore, the base floor part can comprise predefined attachment sections configured in design such that they may be attached to corresponding attachment sections of the automobile body where the OEM-sided original vehicle floor has been attached to. In particular, the base floor part can be designed and configured such that a wheelchair can be stored on it in the rear cargo space of the automobile. The base floor part can be made of plastic or composite material, in particular fiberglass, and/or can be manufactured by injection or resin tranfer molding. For example, a mold may be used for the fiberglass material and vaccum to fill the mold. It is also possible to manufacture the base floor part from sheet metal on a press.

The base floor part extends in a longitudinal direction, wherein a wheelchair can be pushed or driven onto the base floor part from a rear end in longitunidal direction of the base floor part. The longitudinal direction of the base floor part can extend in a horizontal direction. In an assembly state, in which the base floor part is connected to the automobile body, the longitudinal direction of the base floor part is preferably arranged parallel to a longitudinal direction of the automobile. The longitudinal direction of the automobile is defined by the driving direction of the automobile.

The base floor part according to the invention comprises in a longitudinal direction of the base floor part a rearward wheelchair storage section and a forward section arranged at a forward end of the rearward wheelchair storage section. The wheelchair storage section is configured for carrying the rear wheels and the front wheels of the wheelchair. With other words is the wheelchair storage section configured to completely carry the wheelchair, meaning that the front wheels and the rear wheels can be placed on the wheelchair storage section at the same time. Therefore, the wheelchair storage section has a length and a width large enough to carry all wheels of the wheelchair at the same time. In the longitudinal direction of the base floor part, the wheelchair storage section can be arranged at a rear end of the base floor part. A rear end of the wheelchair storage section can be connected for example to a ramp for enabling access for the wheelchair onto the wheelchair storage section. The wheelchair storage section can preferably be inclined to increase the effective length of the wheelchair storage section that can be used to store the wheelchair. The forward section can preferably extend in a horizontal direction and/or be located at least partly above a battery for providing at least part of a driving force of the automobile.

According to the invention, a step is formed between the rearward wheelchair storage section and the forward section, such that the forward section is stepwise elevated from the forward end of the rearward wheelchair storage section. With the step it is possible to lower the forward end of the wheelchair storage section with regard to the forward section. At the step, a distance in vertical direction between the base floor part and the ground, that can be referred to as ground clearance increases abruptly in longitudinal direction of the base floor part. The step allows to use the installation space available for the base floor part in a more flexible and efficient way. With the step, the base floor part can easily be adapted to different components and/or conditions defining the installation space in the automobile, such as a tracktion battery and/or the length of the installation space. When the automobile comprises a large tracktion battery it is possible to arrange the forward section above the battery without the need to raise the forward end of the wheelchair storage section which would normally lead to a reduced height in vertical direction in the automobile interior, so that a wheelchair user might not be able to sit upright and/or to an increased inclination angle of the wheelchair storage section which reduces the comfort for the wheelchair user. Additionally or alternatively, the step can be used to lower the forward end of the wheelchair storage section so that the height in vertical direction in the rear cargo space available for the wheelchair user can be increased and/or the distance in vertical direction between the forward end and a rearward end of an inclined wheelchair storage section can be reduced. With the shorter distance in vertical direction between the forward end and the rearward end of the wheelchair storage section, the inclination angle of the wheelchair storage section can be reduced, which increases the comfort for the wheelchair user.

According to an example embodiment, the step comprises a lower end and an upper end in vertical direction. The upper end of the step can be formed by a rearward end of the forward section and the lower end of the step can be formed by the forward end of the wheelchair storage section. The upper end and/or the lower end of the step extend perpendicular to the longitudinal direction of the base floor part. Additionally or alternatively the upper end and/or the lower end are linear.

According to another example embodiment, the step comprises a substantially planar rearward side and/or a substantially planar forward side in longitudinal direction of the base floor part. The rearward side of the step faces the wheelchair, and the forward side of the step faces the forward end of the automobile and a battery that the automobile can comprise. Preferably the rearward side and the forward side extend parallel to each other, so that the step has a substantially constant wall thickness. The step and the base floor part according to this embodiment can be manufactured in an easy and cheap way. The step can have the same wall thickness as the wheelchair storage section and/or the forward section, but the step can also have a different wall thickness than the wheelchair storag section and/or the forward section.

According to a further example embodiment, the step extends in a vertical direction or is inclined with respect to the vertical direction at an angle between 1 and 30°. Preferably the step can be inclined about 15° with respect to the vertical direction. With a vertical step the effect of lowering the forward end of the wheelchair storage section with regard to the forward section can be maximized. However, an inclination of the step can have the advantage that the base floor part can be manufactured in an easier and cheaper way and that the step can be adapted to the shape of other components of the automobile, such as a battery and/or an automobile body.

According to another example embodiment, the step has height in vertical direction between 10 mm and 80 mm, preferably between 30 mm and 70 mm or about 60 mm. The inventors of the present invention found out that a step height in this range offers maximal comfort to the wheelchair user, when the footrest of the wheelchair is arranged above the forward section and at the same time allows to use the available rear cargo space in an efficient way.

According to a further example embodiment, the base floor part is manufactured in one piece. Prefrably the horizontal section, the step and the wheelchair storage section are manufactured in one piece. In this way the base floor part can be manufactured in an easy and cheap way. Another advantage is that the base floor part can be installed in the automobile in an easy and cheap way without the need to mount separate parts of the base floor part before, during and/or after connecting the base floor part to the automobile body.

According to a further aspect of the present invention that can be combined with the previous aspects and example embodiments, an automobile comprising a base floor part for carrying a wheelchair is provided. The base floor part of the automobile can be configured according to one of the previous aspects and/or example embodiments and can have the same features and advantages described for the previous aspects and/or example embodiments. The automobile further comprises an automobile body that the base floor part can be connected to. The automobile further comprises a battery for providing at least part of a driving force of the automobile. Hence, the automobile can be an electric automobile or a hybrid automobile.

The base floor part extends in a longitudinal direction, wherein a wheelchair can be pushed or driven onto the base floor part from a rear end in longitunidal direction of the base floor part. The longitudinal direction of the base floor part can extend in a horizontal direction. In an assembly state, in which the base floor part is connected to the automobile body, the longitudinal direction of the base floor part is preferably arranged parallel to a longitudinal direction of the automobile. The longitudinal direction of the automobile is defined by the driving direction of the automobile.

According to the further aspect of the invention, the base floor part is arranged at least partly above the battery. In the assembly state, the base floor part and the battery overlap in a vertical direction over a certain distance in longitudinal direction of the base floor part and/or the automobile. In other words, is the base floor part within this distance arranged above the battery in vertical direction. By overlapping the base floor part and the battery, the base floor part can be installed in automobiles with a smaller rear cargo space and/or a bigger tracktion battery, because the base floor part can at least partly be installed in the installation space normally occupied by the battery. Another advantage is that the same base floor part can be used for different automobiles because the length of overlapping between the base floor part and the battery can be changed flexibly. In other words, the portion of the base floor part overlapping with the battery can be adapted without changing the base floor part. Further no modifications and/or relocation of the battery is necessary to install the base floor part in the automobile. Therefore, the automobile according to the first aspect provides a cheap, flexibel and reliable way to install the base floor part in the automobile and at the same time enables to use the installation space in a very efficient way.

In an example embodiment, a ground clearance between the ground, for example the road on which the automobile stands and/or is driven, and a bottom side of the battery is larger than 165 mm, preferably larger than 195 mm. The ground clearance is the distance in vertical direction between the battery and the ground. The ground clearance according to this embodiment ensures that the battery does not collide with the ground even in case of bumps on the ground and/or the additional weight of the base floor part and/or the wheelchair and the wheelchair user. Additionally or alternatively, the battery can be arranged in an initial position as provided by a manufacturer of the automobile. In other words, is the battery arranged in the position as provided by the OEM so that no modification and/or no relcation of the battery is necessary. With the battery arranged in the initial position it is possible to install the base floor part in the automobile in an easy and cheap way with no additional mounting steps before the base floor part is connected to the automobile body.

In an example embodiment, the base floor part comprises a substantially horizontal forward section located forward in a longitudinal direction of the automobile. The horizontal forward section can comprise a substantially horizontal top surface and/or a substantially horizontal bottom surface. In this embodiment the horizontal section is arranged at least partly above the battery.

In a further example embodiment, the base floor part is arranged above the battery over at least 10%, preferably about 20%, of a length of the base floor part in longitudinal direction of the base floor part. In a preferred embodiment, the forward section is arranged above the battery over at least 50%, preferably 70% or at least 90%, of a length of the forward section.

According to another example embodiment, a top side of the battery and at least part of a bottom side of the base floor part, in particular at least part of a bottom side of the forward section, extend parallel to each other. In this embodiment, the bottom side of the base floor part or the forward section can be adapted to the top side of the battery, to be able to arrange the base floor part as low as possible in vertical direction to increase the height available for the wheelchair user in the interior of the vehicle.

According to a further example embodiment, a gap between the bottom side of the forward section and the top side of the battery is between 5 mm and 15 mm, preferably between 8 mm and 12 mm or about 10 mm. With these gap dimensions the base floor part is not affected when the battery heats up during driving and the battery and the base floor part do not collide in case of bumps on the street and/or when the weight of the wheeclahir and the wheelchair user acts on the base floor part when a wheelchair is stored on the base floor part.

According to a further aspect of the present invention that can be combined with the previous aspects and example embodiments, an automobile comprising a base floor part for carrying a wheelchair is provided. The base floor part of the automobile can be configured according to one of the previous aspects and/or example embodiments and can have the same features and advantages described for the previous aspects and/or example embodiments. The automobile further comprises an automobile body that the base floor part can be connected to.

The base floor part extends in a longitudinal direction, wherein a wheelchair can be pushed or driven onto the base floor part from a rear end in longitunidal direction of the base floor part. The longitudinal direction of the base floor part can extend in a horizontal direction. In an assembly state, in which the base floor part is connected to the automobile body, the longitudinal direction of the base floor part is preferably arranged parallel to a longitudinal direction of the automobile. The longitudinal direction of the automobile is defined by the driving direction of the automobile. The base floor part comprises a wheelchair storage section configured for carrying the rear wheels and the front wheels of the wheelchair. With other words is the wheelchair storage section configured to completely carry the wheelchair, meaning that the front wheels and the rear wheels can be placed on the wheelchair storage section at the same time. Therefore, the wheelchair storage section has a length and a width large enough to carry all wheels of the wheelchair at the same time. In the longitudinal direction of the base floor part, the wheelchair storage section can be arranged at a rear end of the base floor part. A rear end of the wheelchair storage section can be connected for example to a ramp for enabling access for the wheelchair onto the wheelchair storage section.

According to the further aspect of the invention, a top side of the wheelchair storage section is inclined at an angle between 1% and 15% with respect to a horizontal direction. In particular, the wheelchair storage section can be inclined at an angle of less than 12%, 9% or 3% with respect to the horizontal direction. As the wheelchair storage section is configured to carry the front wheels and the rear wheels, the wheelchair is inclined at the same angle as the wheelchair storage section, when stored on the wheelchair storage section. With the inclined wheelchair storage section, it is possible to increase the effective length of the wheelchair storage section that can be used to store the wheelchair, in particular to carry the wheels of the wheelchair, within the same rear cargo space of the automobile, compared to a wheelchair storage section extending in horizontal direction. Hence, with the autombile according to this aspect it is possible to install the base floor part in a smaller rear cargo space, for example because of a large tracktion battery in electrically powered automobiles, without the need to change the automobile body and without the need to change or relocate the tracktion battery of the automobile. With a smaller inclination angle the comfort for the wheelchair user can be increased but at the same time the effective length of the wheelchair storage section is reduced. The inventors of the present invention found out, that with an inclination angle between 1 and 15°, preferably less than 12%, 9% or 3% an optimum between cheap installation of the base floor part, efficient use of the available installation space and comfort for the wheelchair user can be reached.

According to a further aspect of the present invention that can be combined with the previous aspects and example embodiments, an automobile comprising a base floor part for carrying a wheelchair is provided. The base floor part of the automobile can be configured according to one of the previous aspects and/or example embodiments and can have the same features and advantages described for the previous aspects and/or example embodiments. The automobile further comprises an automobile body that the base floor part can be connected to.

The base floor part extends in a longitudinal direction, wherein a wheelchair can be pushed or driven onto the base floor part from a rear end in longitunidal direction of the base floor part. The longitudinal direction of the base floor part can extend in a horizontal direction. In an assembly state, in which the base floor part is connected to the automobile body, the longitudinal direction of the base floor part is preferably arranged parallel to a longitudinal direction of the automobile. The longitudinal direction of the automobile is defined by the driving direction of the automobile. The base floor part comprises a rearward section located rearward in a longitudinal direction of the automobile and a forward section located forward in the longitudinal direction of the automobile. The rearward section is configured for carrying the rear wheels and the front wheels of the wheelchair. With other words is the wheelchair storage section configured to completely carry the wheelchair, meaning that the front wheels and the rear wheels can be placed on the wheelchair storage section at the same time. Therefore, the wheelchair storage section has a length and a width large enough to carry all wheels of the wheelchair at the same time. In the longitudinal direction of the base floor part, the wheelchair storage section can be arranged at a rear end of the base floor part. A rear end of the wheelchair storage section can be connected for example to a ramp for enabling access for the wheelchair onto the wheelchair storage section. The wheelchair storage section can preferably be inclined to increase the effective length of the wheelchair storage section that can be used to store the wheelchair. The forward section can preferably extend in a horizontal direction and/or be located at least partly above a battery for providing at least part of a driving force of the automobile.

According to the further aspect, a step is formed between the rearward section and the forward section, such that the forward section is stepwise elevated from the forward end of the rearward section. With the step it is possible to lower the forward end of the rearward section with regard to the forward section. At the step, a distance in vertical direction between the base floor part and the ground, that can be referred to as ground clearance increases abruptly in longitudinal direction of the base floor part. The step allows to use the installation space available for the base floor part in a more flexible and efficient way. With the step, the base floor part can easily be adapted to different components and/or conditions defining the installation space in the automobile, such as a tracktion battery and/or the length of the installation space. When the automobile comprises a large tracktion battery it is possible to arrange the forward section above the battery without the need to raise the forward end of the rearward section which would normally lead to a reduced height in vertical direction in the automobile interior, so that a wheelchair user might not be able to sit upright, and/or to an increased inclination angle of the rearward section which reduces the comfort for the wheelchair user. Additionally or alternatively, the step can be used to lower the forward end of the rearward section so that the height in vertical direction in the rear cargo space available for the wheelchair user can be increased and/or the distance in vertical direction between the forward end and a rearward end of an inclined rearward section can be reduced. With the shorter distance in vertical direction between the forward end and the rearward end of the rearward section, the inclination angle of the rearward section can be reduced, which increases the comfort for the wheelchair user.

According to another example embodiment, the automobile further comprises a battery for providing at least part of a driving force of the automobile. The battery has a predefined shape. A bottom side of the base floor part, in particular a bottom side of the forward section, and/or a forward side surface of the step facing the battery are at least partly adapted to the shape of the battery. In other words, the bottom side of the forward section and/or the forward side of the step can comprise the same shape as the battery. Due to this the base floor part can be arranged close to the battery and the available installation space can be used in an efficient way.

According to another example embodiment, a gap between a forward side of the step facing the battery and a side surface of the battery is between 5 mm and 15 mm, preferably between 8 mm and 12 mm or about 10 mm. With these gap dimensions the base floor part is not affected when the battery heats up during driving.

According to a further aspect of the present invention that can be combined with the previous aspects and example embodiments, a system comprising a base floor part for carrying a wheelchair adapted to be connected to an automobile and a wheelchair or a system comprising an automobile with a base floor part for carrying a wheelchair and a wheelchair is provided. The base floor part and/or the automobile can be configured according to one of the previous aspects and/or example embodiments and can have the same features and advantages described for the previous aspects and/or example embodiments.

The base floor part extends in a longitudinal direction, wherein a wheelchair can be pushed or driven onto the base floor part from a rear end in longitunidal direction of the base floor part. The longitudinal direction of the base floor part can extend in a horizontal direction. In an assembly state, in which the base floor part is connected to the automobile body, the longitudinal direction of the base floor part is preferably arranged parallel to a longitudinal direction of the automobile. The longitudinal direction of the automobile is defined by the driving direction of the automobile.

The base floor part comprises in longitudinal direction of the base floor part and/or the automobile an inclined rearward section and a substantially horizontal forward section. The inclined rearward section is configured for carrying the wheelchair. According to this aspect of the invention, a length of the inclined rearward section in longitudinal direction of the base floor part is shorter than the wheelchair, in particular shorter than 120 cm, such that a footrest of the wheelchair is arranged above the horizontal forward section. With this embodiment a base floor part requiring minimal installation space is provided. To keep the wheelchair from rolling back when stored on the inclined rearward section, the wheelchair can for example be secured with one or more belts that are connected to the base floor part and/or the automobile.

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention.

However, it will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- Figure 1: shows a base floor part according to an example embodiment of the present invention carrying in an assembly state with a battery of an automobile carrying a wheelchair;
- Figure 2: shows the base floor part of figure 1 in a different perspective view;
- Figure 3: shows a schematic view of the rear cargo space of an automobile according to an example embodiment of the present invention; and
- Figure 4: shows a detailed view of the base floor part from figure 3 according to section IV in figure 3.

In the following description of prefered embodiments of the invention by means of the enclosed figures, a base floor part according to the invention is generally indicated with the reference sign 1 and an automobile according to the invention comprising a base floor part 1 is generally indicated with the reference sign 10.

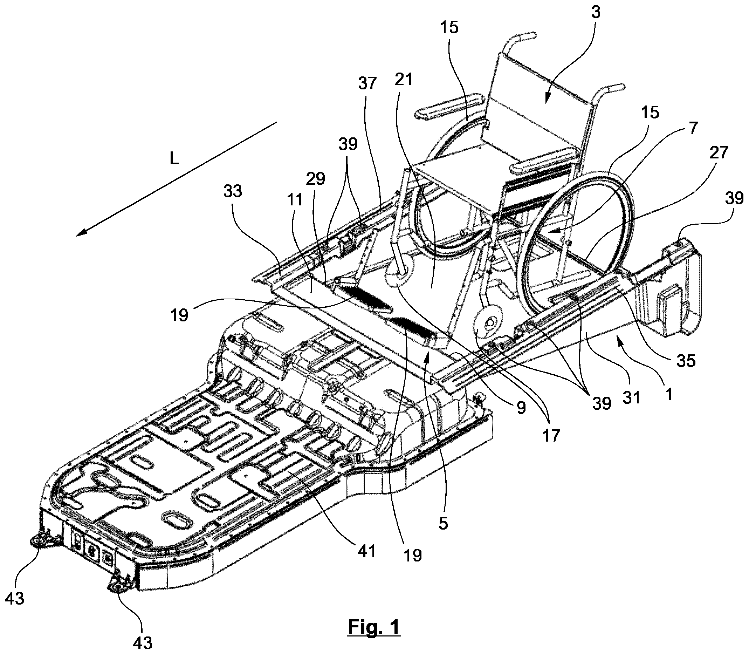

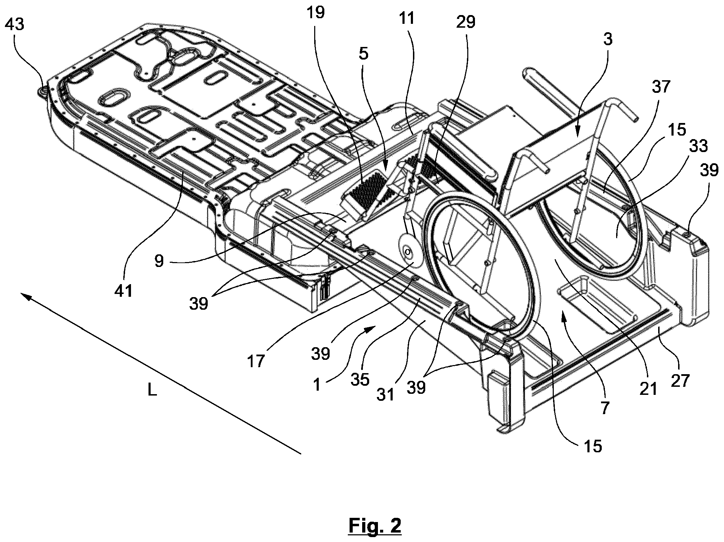

Figures 1 and 2 show different perspective views of a base floor part 1 with a wheelchair 3 stored on the base floor part 1. The base floor part 1 comprises the following main parts: a horizontal battery section 5, an inclined wheelchair strorage section 7 and a step 9 between the battery section 5 and the wheelchair storage section 7.

The base floor part 1 is manufactured in one piece. Hence, the horizontal section 5, the step 9 and the wheelchair storage section 7 are manufactured in one piece. The base floor part 1 can be made of plastic or composite material, in particular fiberglass, and/or can be manufactured by injection or resin tranfer molding. For example, a mold may be used for the fiberglass material and vaccum to fill the mold. It is also possible to manufacture the base floor 1 part from sheet metal on a press.

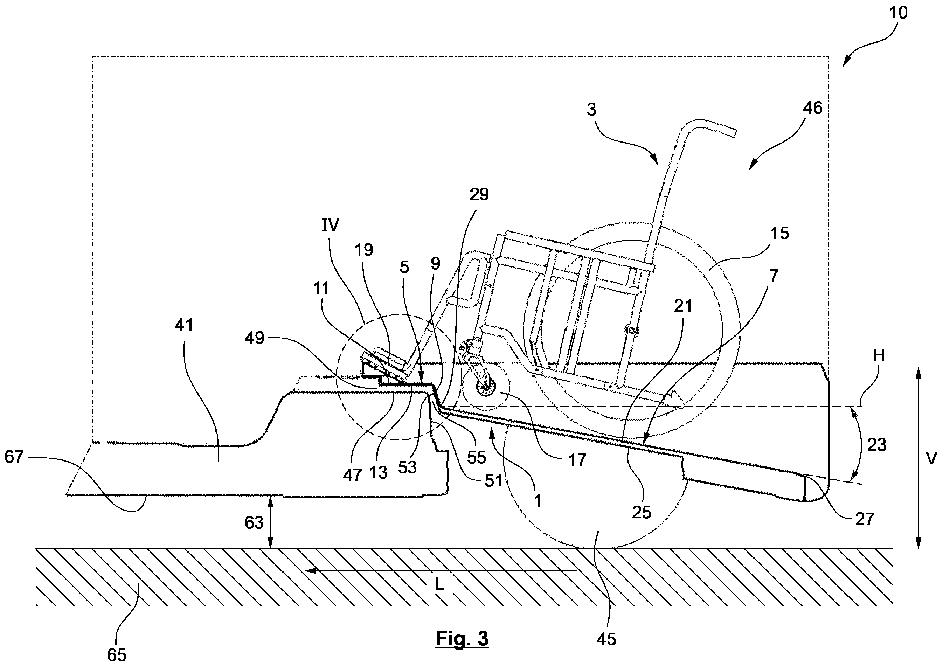

The base floor part 1 extends in a longitudinal direction L, wherein the wheelchair 3 can be driven or pushed onto the base floor part 1 from a rearward end 27 in longitudinal direction L of the base floor part. The battery section 5 is located forward in longitudinal direction L and comprises a horzizontal top side 11 and a horizontal bottom side 13. As can be seen in figure 3, due to this the battery section 5 comprises a constant wall thickness over the whole length of the battery section 5 in longitudinal direction L. The wall thickness is also constant over the width of the horizontal section 5 perpendicular to the longitudinal direction L. In the example embodiment shown in figures 1 and 2 the length of the horizontal section 5 in longitudinal direction L is about 20 cm.

The wheelchair storage section 7 is configured to carry the wheelchair 3. The wheelchair 3, as most commercially available wheelchairs, comprises two large rear wheels 15 and two smaller front wheels 17. The wheelchair 3 also comprises a foot rest 19, where a wheelchair user can place his feet. The foot rest 19 is arranged forward of the front wheels 17 in longitudinal direction L. Comercially available wheelchairs often have a total length of 120 cm from a forward end of the foot rest 19 to a rearward end of the rear wheels 15 and a width of 58 cm to 72 cm.

The wheelchair storage section 7 is located rearward in longitudinal direction L of the base floor part 1 and is configured to carry all for wheels of the wheelchair 3, namely the two rear wheels 15 and the two front wheels 17 at the same time, as shown in figures 1 and 2. Therefore the width of the wheelchair storage section 7 is larger than the width of the wheelchair 3 and the length of the wheelchair storage section 7 is larger than the distance between the rear wheels 15 and the front wheels 17. The wheelchair storage section 7 comprises a top side 21 that is inclined at an angle between 1° and 15°, preferably less than 12°, 9° or 3° with respect to a horizontal direction H. In figure 3 the inclination angle is indicated with reference sign 23. As can be seen in figure 3, a bottom surface 25 of the wheelchair storage section 7 is inclined with the same angle 23 with respect to the horizontal direction H as the top side 21, so that the wheelchair storage section 7 has a constant wall thickness over the entire length of the wheelchair storage section 7.

The wheelchair storage section 7 has a rearward end 27 in longitudinal direction L, that is the lowest point in vertical direction V of the wheelchair storage section 7. Respectively a forward end 29 of the wheelchair storage section 7 is the highest point in vertical direction V. As can be seen in figure 3, the top side 21 has a constant inclination angle 23 over the entire length of the wheelchair storage section 7 from the rearward end 27 to the forward end 29.

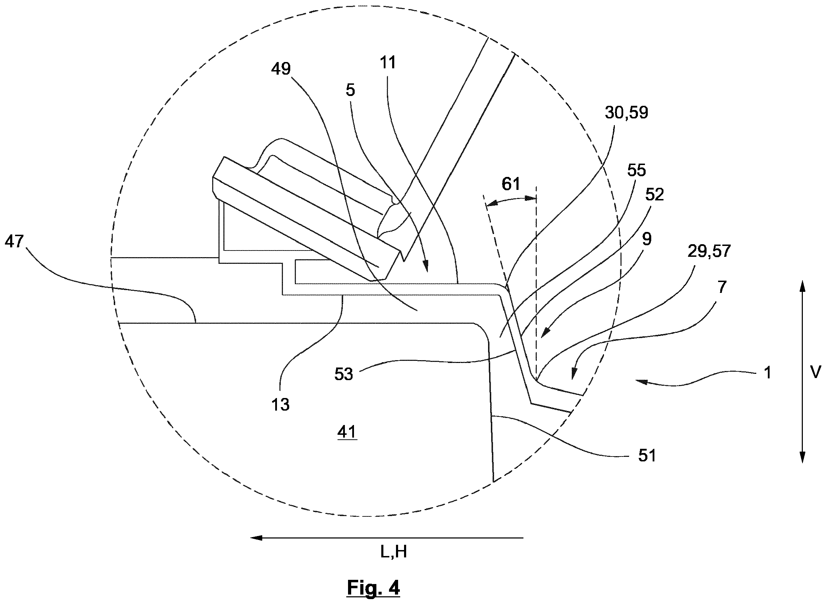

The step 9 is located between the battery section 5 and the wheelchair storage section 7. At the step 9 the battery section 5 is stepwise elevated from the forward end 29 of the wheelchair storage section 7. A detailed view of the step 9 is shown in figure 4. The step 9 extends between a lower end 57 formed by the forward end 29 of the wheelchair storage section 7 and an upper end 59 formed by a rearward end 30 of the forward section 5. The upper end 57 and the lower end 59 extend linear and perpendicular to the longitudinal direction L along the entire width of the forward section 5 and the wheelchair storage section 7. The step comprises a planar rearward side 52 facing the wheelchair 3 and a planar forward side 53 facing the battery 41. In the embodiment in figure 3, the rearward side 52 and the forward side 53 extend parallel to each other, so that the step 9 has a constant wall thickness. The step 9 is inclined with regard to the vertical direction V at an angle of about 15°, that is indicated in figure 4 with the reference sign 61. In the embodiment in figure 3, the height of the step 9 in vertical direction V, hence the distance in vertical direction V between the forward end 29 of the wheelchair stirage section 7 and the top side 11 of the battery section 5 is about 60 mm.

In the embodiment in figures 1 and 2, the battery section 5 and the wheelchair section 7 comprise side walls 31, 33 on both sides that protrude from the top surface 11 of the battery sections and the top surface 21 of the wheelchair storage section 7 in vertical direction V. The side walls 31, 33 each have a substantially horizontal top side 35, 37. The side walls 31, 33 comprise on the top sides 35, 37 a number of connection points 39 for connecting the base floor part 1 to a body of an automobile (not shown in figures 1 and 2).

Figures 1 and 2 also show a battery 41 for providing at least part of a driving force of an automobile 10 according to the present invention or an automobile that the base floor part 1 is adapted to be connected to. The battery 41 has two connection points 43 for connecting the battery 41 to the body of the automobile 10.

The effects and advantages of the base floor part 1 according to the invention will be described in view of figure 3, that shows a schematic view of a rear cargo space 46 of an automobile 10 according to the invention with the base floor part 1 installed in the automobile 10.

The automobile 10 comprises a battery 41 for providing at least part of a drinving force of the automobile 10. The base floor part 1 is connected to a body (not shown) of the automobile 10 in longitudinal direction L in the area of a rear suspension and the rear wheels 45 of the automobile 10, hence in the rear cargo space 46 of the automobile 10. In the embodiment in figure 3 a ground clearance of the battery, hence a distance in vertical direction between the ground 65 the automobile 10 is placed on and a bottom side 67 of the battery 41 is about 195 mm. This corresponds to the position in which the battery 41 is arranged when the automobile 10 comes from a manufacturer of the automobile 10 before the original vehicle floor is replaced with the base floor part 1. Hence no battery relocation or modification is necessary to install the base floor part 1 in the automobile 10.

Therefore, the geometry of the base floor part is adapted to the small rear cargo space in the following way to use the rear cargo space in an efficient way.

The battery section 5 of the base floor part 1 is arranged above the battery 41 over almost the entire length of the battery section 5. It can be seen in figure 3, that the battery 41 and the battery section 5 overlap in vertical direction V over almost the entire length of the forward section 5. By overlapping the forward section 5 and the battery 41, the base floor part 1 can be installed in a smaller rear cargo space and/or in automobiles with a bigger battery, because the base floor part 1 can at least partly be installed in the installation space normally occupied by the battery 41.

It can be seen in figure 3 and also in figure 4 that the bottom side 13 of the forward section 5 and the forward side 53 of the step 9 are adapted to the shape of the battery 41. Between the bottom side 13 of the battery section 5 and a top side 47 of the battery 41, that extend in the horizontal direction H parallel to each other, a gap 49 of about 10 mm is formed. These gap dimensions allow to place the base floor part 1 as low as possible without colliding wit the battery 41 even if the ground 65 has bumps and/or the weight of the weheelchair 3 and/or the wheelchair user acts on the base floor part 1. It further prevents that the base floor part 1 is affected by rising temperatures of the battery 41 during driving of the automobile 10. Between a rear side surface 51 of the battery 41 and a forward side 53 of the step 9 facing the battery 41, a gap 55 of about 10 mm is formed. With these gap dimensions the base floor part 1 is not affected when the battery 41 heats up during driving but allows to install the base floor part 1 as far forward as possible.

The inclination of the wheelchair storage section 7 is a further feature that helps to reduce the rear cargo space 46 needed for installing the base floor part 1. The inclination of the wheelchair storage section 7 allows to increase the effective length of the wheelchair storage section 7 that can be used to store the wheelchair 3. The inventors of the present invention found out, that with an inclination angle 23 between 1 and 15°, preferably less than 12%, 9% or 3% an optimum between cheap installation of the base floor part 1, efficient use of the available installation space and comfort for the wheelchair user can be reached.

The step 9 allows to reduce the inclination angle 23 of the wheelchair storage section 7. With the step 9 the forward end 29 of the wheelchair storage section 7 can be lowered with regard to the battery section 5 that is arranged above the battery 41. Due to the lowered forward end 29, the distance in vertical direction V between the forward end 29 and the rearward end 27 of the wheelchair storage section 7 can be reduced. With the shorter distance in vertical direction V between the forward end 29 and the rearward end 27 the inclination angle 23 can be reduced, which increases the comfort for the wheelchair user. In addition, the height in vertical direction V in the rear cargo space available for the wheelchair user can be increased so that the wheelchair user can sit upright on the wheelchair 3 in the interior of the automobile.

Lastly, the needed rear cargo space 46 is further reduced by arranging the foot rest 19 of the wheelchair 3 above the battery section 5. This way the wheelchair storage section 7 can have a length that is shorter than the wheelchair 3, hence shorter 120 cm, and also shorter than the length of previously used base floor parts. In the embodiment in figure 3, the length of the wheelchair storage section 7 is about 102 cm.

### REFERENCE SIGN LIST

- 1: base floor part
- 10: automobile
- 3: wheelchair
- 5: horizontal battery section
- 7: inclined wheelchair storage section
- 9: step
- 11: forward section top side
- 13: forward section bottom side
- 15: wheelchair rear wheel
- 17: wheelchair front wheel
- 19: foot rest
- 21: wheelchair storage section top side
- 23: inclination angle
- 25: wheelchair storage section bottom side
- 27: wheelchair storage section rearward end
- 29: wheelchair storage section forward end
- 30: forward section rearward end
- 31, 33: side wall
- 35, 37: side wall top side
- 39: connection point base floor part
- 41: battery
- 43: connection point battery
- 45: automobile rear wheel
- 46: rear cargo space
- 47: battery top side
- 49: gap
- 51: battery side surface
- 52: step rearward side
- 53: step forward side
- 55: gap
- 57: step lower end
- 59: step upper end
- 61: inclination angle
- 63: ground clearance
- 65: ground
- 67: battery bottom side

- L: longitudinal direction
- H: horizontal direction
- V: vertical direction

## Claims

1. Base floor part (1) for carrying a wheelchair (3) adapted to be connected to a body of an automobile, the wheelchair (3) comprising rear wheels (15) and front wheels (17), the base floor part (1) comprising in a longitudinal direction (L) of the base floor part (1) a rearward wheelchair storage section (7), configured for carrying the rear wheels (15) and the front wheels (17) of the wheelchair (3), and a forward section (5) arranged at a forward end (29) of the wheelchair storage section (7), wherein a step (9) is formed between the wheelchair storage section (7) and the forward section (5), such that the forward section (5) is stepwise elevated from the forward end (29) of the wheelchair storage section (7),
wherein a length of the forward section (5) is between 10 cm and 30 cm,
wherein the base floor part (1) is designed in such a way, that it can be arranged at least partly above a battery (41) of the automobile for providing at least part of a driving force of the automobile,
wherein a top side (21) of the wheelchair storage section (7) is inclined at an angle (23) between 1% and 15% with respect to a horizontal direction (H).

2. Base floor part (1) according to claim 1, wherein the step (9) comprises a lower end (57) and an upper end (59), wherein the lower end (57) and/or the upper end (59) is linear and/or extends perpendicular to the longitudinal direction (L).

3. Base floor part (1) according to claim 1 or 2, wherein the step (9) comprises a substantially planar rearward side (52) and/or a substantially planar forward side (53), wherein in particular the rearward side (52) and the forward side (53) extend parallel to each other.

4. Base floor part (1) according to one of the preceding claims, wherein the step (9) extends in a vertical direction (V) or is inclined with respect to the vertical direction (V) at an angle (61) between 1 and 30°, in particular about 15°.

5. Base floor part (1) according to one of the preceding claims, wherein a height of the step (9) in vertical direction (V) is between 10 mm and 80 mm, preferably between 30 mm and 70 mm or about 60 mm.

6. Base floor part (1) according to one of the preceding claims, wherein the base floor part (1), in particular the horizontal section (5), the step (9) and the wheelchair storage section (7), is manufactured in one piece.

7. Base floor part (1) according to any one of claims 1 to 6, wherein the forward section (5) is substantially horizontal and has a substantially horizontal top side (11) and/or a substantially horizontal bottom side (13), wherein the base floor part (1) is designed in such a way, that the forward section (5) can be arranged at least partly above the battery (41).

8. Base floor part (1) according to any one of claims 1 to 7, wherein a bottom side (25) of the wheelchair storage section (7) is inclined at the same angle (23) with respect to the horizontal direction (H) as the top side (21) of the wheelchair storage section (7).

9. Base floor part (1) according to any one of claims 1 to 8, wherein the top side (21) and/or the bottom side (25) has the same inclination angle (23) over the entire length of the wheelchair storage section (7).

10. Base floor part (1) according to one of claims 1 to 8, wherein a length of the wheelchair storage section (7) is shorter than the wheelchair (3), in particular shorter than 120 cm, wherein in particular the length of the wheelchair storage section (7) is between 90 cm and 110 cm, preferably about 100 cm or 102 cm, in particular such that the forward section (5) is configured to accommodate a foot rest (19) of the wheelchair (3).

11. Base floor part (i)according to any of the preceding claims, wherein the step (9) is formed between the wheelchair storage section (7) and the forward section (5), such that the forward section (5) is stepwise elevated from the forward end (29) of the wheelchair storage section (7)
such that an inclination angle of the wheelchair storage section (7) is reduced compared to a base floor part without a step (9).

12. Automobile (10) comprising a base floor part (1) for carrying a wheelchair (3) according to one of the preceding claims and a battery (41) for providing at least part of a driving force of the automobile (10), wherein the base floor part (1) is arranged at least partly above the battery (41).

13. Automobile (10) according to claim 12, wherein a ground clearance (63) between the ground (65) and a bottom side (67) of the battery (41) is larger than 165 mm, preferably about 195 mm, and/or the battery (41) is arranged in an initial position as provided by a manufacturer of the automobile (10).

14. Automobile (10) according to claim 12 or 13, wherein the base floor (1) part comprises a substantially horizontal forward section (5) located forward in a longitudinal direction (L) of the automobile (10), wherein the forward section (5) is arranged at least partly above the battery (41).

15. Automobile (10) according to one of claims 12 to 14, wherein the base floor part (1) is arranged above the battery (41) over at least 10%, preferably about 20%, of a length of the base floor part (₁), wherein in particular the forward section (5) is arranged above the battery (41) over at least 50%, preferably at least 70% or at least 90%, of a length of the forward section (5).

16. Automobile (10) according to one of claims 12 to 15, wherein a top side (47) of the battery (41) and at least part of a bottom side of the base floor part (₁), in particular at least part of a bottom side (13) of the forward section (5), extend parallel to each other.

17. Automobile (10) according to claim 16, wherein a gap (49) between the bottom side (13) of the forward section (5) and the top side (47) of the battery (41) is between 5 mm and 15 mm, preferably between 8 mm and 12 mm or about 10 mm.

18. Automobile (10) according to one of claims 12 to 17, wherein a top side (21) of the wheelchair storage section (7) is inclined at an angle (23) less than 12%, 9% or 3% with respect to the horizontal direction (H).

19. Automobile (10) according to any one of claims 12 to 18 further comprising a wherein the battery (41) for providing at least part of a driving force of the automobile (10) having a predefined shape, wherein a bottom side of the base floor part (1), in particular a bottom side (13) of the forward section (5), and/or a side surface (53) of the step (9) facing the battery (41) are at least partly adapted to the shape of the battery (41).

20. Automobile according to claim 19, wherein a gap (55) between a side surface (51) of the battery (41) and a forward surface (53) of the step (9) facing the battery (41) is between 5 mm and 15 mm, preferably between 8 mm and 12 mm or about 10 mm.

## Patentansprüche

1. Basisbodenteil (1) zum Tragen eines Rollstuhls (3), der dazu eingerichtet ist, mit einer Karosserie eines Kraftfahrzeugs verbunden zu werden, wobei der Rollstuhl (3) Hinterräder (15) und Vorderräder (17) umfasst, wobei das Basisbodenteil (1) in einer Längsrichtung (L) des Basisbodenteils (1) einen hinteren Rollstuhlaufbewahrungsabschnitt (7), der zum Tragen der Hinterräder (15) und der Vorderräder (17) des Rollstuhls (3) konfiguriert ist, und einen vorderen Abschnitt (5), der an einem vorderen Ende (29) des Rollstuhlaufbewahrungsabschnitts (7) angeordnet ist, umfasst, wobei eine Stufe (9) zwischen dem Rollstuhlaufbewahrungsabschnitt (7) und dem vorderen Abschnitt (5) gebildet ist, sodass der vordere Abschnitt (5) stufenartig von dem vorderen Ende (29) des Rollstuhlaufbewahrungsabschnitts (7) erhöht ist,
wobei eine Länge des vorderen Abschnitts (5) zwischen 10 cm und 30 cm beträgt,
wobei das Basisbodenteil (1) derart ausgebildet ist, dass es zumindest teilweise über einer Batterie (41) des Kraftfahrzeugs zum Bereitzustellen zumindest eines Teils einer Antriebskraft des Kraftfahrzeugs angeordnet werden kann,
wobei eine Oberseite (21) des Rollstuhlaufbewahrungsabschnitts (7) in einem Winkel (23) zwischen 1 % und 15 % in Bezug auf eine horizontale Richtung (H) geneigt ist.

2. Basisbodenteil (1) nach Anspruch 1, wobei die Stufe (9) ein unteres Ende (57) und ein oberes Ende (59) umfasst, wobei das untere Ende (57) und/oder das obere Ende (59) linear ist und/oder sich senkrecht zu der Längsrichtung (L) erstreckt.

3. Basisbodenteil (1) nach Anspruch 1 oder 2, wobei die Stufe (9) eine im Wesentlichen ebene Rückseite (52) und/oder eine im Wesentlichen ebene Vorderseite (53) umfasst, wobei sich insbesondere die Rückseite (52) und die Vorderseite (53) parallel zueinander erstrecken.

4. Basisbodenteil (1) nach einem der vorhergehenden Ansprüche, wobei sich die Stufe (9) in einer vertikalen Richtung (V) erstreckt oder in Bezug auf die vertikale Richtung (V) in einem Winkel (61) zwischen 1 und 30°, insbesondere etwa 15°, geneigt ist.

5. Basisbodenteil (1) nach einem der vorhergehenden Ansprüche, wobei eine Höhe der Stufe (9) in vertikaler Richtung (V) zwischen 10 mm und 80 mm, vorzugsweise zwischen 30 mm und 70 mm oder etwa 60 mm, beträgt.

6. Basisbodenteil (1) nach einem der vorhergehenden Ansprüche, wobei das Basisbodenteil (₁), insbesondere der horizontale Abschnitt (5), die Stufe (9) und der Rollstuhlaufbewahrungsabschnitt (7) einstückig hergestellt sind.

7. Basisbodenteil (1) nach einem der Ansprüche 1 bis 6, wobei der vordere Abschnitt (5) im Wesentlichen horizontal ist und eine im Wesentlichen horizontale Oberseite (11) und/oder eine im Wesentlichen horizontale Unterseite (13) aufweist, wobei das Basisbodenteil (1) derart ausgebildet ist, dass der vordere Abschnitt (5) zumindest teilweise über der Batterie (41) angeordnet werden kann.

8. Basisbodenteil (1) nach einem der Ansprüche 1 bis 7, wobei eine Unterseite (25) des Rollstuhlaufbewahrungsabschnitts (7) in dem gleichen Winkel (23) in Bezug auf die horizontale Richtung (H) wie die Oberseite (21) des Rollstuhlaufbewahrungsabschnitts (7) geneigt ist.

9. Basisbodenteil (1) nach einem der Ansprüche 1 bis 8, wobei die Oberseite (21) und/oder die Unterseite (25) über die gesamte Länge des Rollstuhlaufbewahrungsabschnitts (7) den gleichen Neigungswinkel (23) aufweisen.

10. Basisbodenteil (1) nach einem der Ansprüche 1 bis 8, wobei eine Länge des Rollstuhlaufbewahrungsabschnitts (7) kürzer als der Rollstuhl (3), insbesondere kürzer als 120 cm, ist, wobei insbesondere die Länge des Rollstuhlaufbewahrungsabschnitts (7) zwischen 90 cm und 110 cm, vorzugsweise etwa 100 cm oder 102 cm, beträgt, insbesondere derart, dass der vordere Abschnitt (5) dazu eingerichtet ist, eine Fußauflage (19) des Rollstuhls (3) aufzunehmen.

11. Basisbodenteil (1) nach einem der vorhergehenden Ansprüche, wobei die Stufe (9) zwischen dem Rollstuhlaufbewahrungsabschnitt (7) und dem vorderen Abschnitt (5) gebildet ist, sodass der vordere Abschnitt (5) stufenartig von dem vorderen Ende (29) des Rollstuhlaufbewahrungsabschnitts (7) erhöht ist,
sodass ein Neigungswinkel des Rollstuhlaufbewahrungsabschnitts (7) im Vergleich zu einem Basisbodenteil ohne eine Stufe (9) verringert ist.

12. Kraftfahrzeug (10) umfassend ein Basisbodenteil (1) zum Tragen eines Rollstuhls (3) nach einem der vorhergehenden Ansprüche und eine Batterie (41) zum Bereitstellen zumindest eines Teils einer Antriebskraft des Kraftfahrzeugs (10), wobei das Basisbodenteil (1) zumindest teilweise über der Batterie (41) angeordnet ist.

13. Kraftfahrzeug (10) nach Anspruch 12, wobei ein Bodenabstand (63) zwischen dem Boden (65) und einer Unterseite (67) der Batterie (41) größer als 165 mm, vorzugsweise etwa 195 mm, ist und/oder die Batterie (41) in einer Ausgangsposition angeordnet ist, wie sie von einem Hersteller des Kraftfahrzeugs (10) bereitgestellt wird.

14. Kraftfahrzeug (10) nach Anspruch 12 oder 13, wobei das Basisbodenteil (1) einen im Wesentlichen horizontalen vorderen Abschnitt (5) umfasst, der sich in einer Längsrichtung (L) des Kraftfahrzeugs (10) vorne befindet, wobei der vordere Abschnitt (5) zumindest teilweise über der Batterie (41) angeordnet ist.

15. Kraftfahrzeug (10) nach einem der Ansprüche 12 bis 14, wobei das Basisbodenteil (1) über mindestens 10 %, vorzugsweise etwa 20 %, einer Länge des Basisbodenteils (1) über der Batterie (41) angeordnet ist, wobei insbesondere der vordere Abschnitt (5) über mindestens 50 %, vorzugsweise mindestens 70 % oder mindestens 90 %, einer Länge des vorderen Abschnitts (5) über der Batterie (41) angeordnet ist.

16. Kraftfahrzeug (10) nach einem der Ansprüche 12 bis 15, wobei sich eine Oberseite (47) der Batterie (41) und zumindest ein Teil einer Unterseite des Basisbodenteils (₁), insbesondere zumindest ein Teil einer Unterseite (13) des vorderen Abschnitts (5), parallel zueinander erstrecken.

17. Kraftfahrzeug (10) nach Anspruch 16, wobei ein Spalt (49) zwischen der Unterseite (13) des vorderen Abschnitts (5) und der Oberseite (47) der Batterie (41) zwischen 5 mm und 15 mm, vorzugsweise zwischen 8 mm und 12 mm oder etwa 10 mm, beträgt.

18. Kraftfahrzeug (10) nach einem der Ansprüche 12 bis 17, wobei eine Oberseite (21) des Rollstuhlaufbewahrungsabschnitts (7) in einem Winkel (23) von weniger als 12 %, 9 % oder 3 % in Bezug auf die horizontale Richtung (H) geneigt ist.

19. Kraftfahrzeug (10) nach einem der Ansprüche 12 bis 18, ferner umfassend eine Batterie (41) zum Bereitstellen zumindest eines Teils einer Antriebskraft des Kraftfahrzeugs (10), die eine vordefinierte Form aufweist, wobei eine Unterseite des Basisbodenteils (₁), insbesondere eine Unterseite (13) des vorderen Abschnitts (5), und/oder eine Seitenfläche (53) der Stufe (9), die der Batterie (41) zugewandt ist, zumindest teilweise an die Form der Batterie (41) angepasst sind.

20. Kraftfahrzeug nach Anspruch 19, wobei ein Spalt (55) zwischen einer Seitenfläche (51) der Batterie (41) und einer vorderen Fläche (53) der Stufe (9), die der Batterie (41) zugewandt ist, zwischen 5 mm und 15 mm, vorzugsweise zwischen 8 mm und 12 mm oder etwa 10 mm, beträgt.

## Revendications

1. Partie plancher de base (1) pour porter un fauteuil roulant (3), adaptée pour être reliée à une carrosserie d'une automobile, le fauteuil roulant (3) comprenant des roues arrière (15) et des roues avant (17), la partie plancher de base (1) comprenant, dans une direction longitudinale (L) de la partie plancher de base (1), une section de rangement de fauteuil roulant vers l'arrière (7), configurée pour porter les roues arrière (15) et les roues avant (17) du fauteuil roulant (3), et une section vers l'avant (5) agencée au niveau d'une extrémité vers l'avant (29) de la section de rangement de fauteuil roulant (7), dans laquelle une marche (9) est formée entre la section de rangement de fauteuil roulant (7) et la section vers l'avant (5), de sorte que la section vers l'avant (5) soit élevée de manière graduelle à partir de l'extrémité vers l'avant (29) de la section de rangement de fauteuil roulant (7),
dans laquelle une longueur de la section vers l'avant (5) est entre 10 cm et 30 cm,
dans laquelle la partie plancher de base (1) est conçue de manière à pouvoir être agencée au moins partiellement au-dessus d'une batterie (41) de l'automobile pour fournir au moins une partie d'une force motrice de l'automobile,
dans laquelle un côté supérieur (21) de la section de rangement de fauteuil roulant (7) est incliné d'un angle (23) entre 1 % et 15 % par rapport à une direction horizontale (H).

2. Partie plancher de base (1) selon la revendication 1, dans laquelle la marche (9) comprend une extrémité inférieure (57) et une extrémité supérieure (59), dans laquelle l'extrémité inférieure (57) et/ou l'extrémité supérieure (59) sont linéaires et/ou s'étendent perpendiculairement à la direction longitudinale (L).

3. Partie plancher de base (1) selon la revendication 1 ou 2, dans laquelle la marche (9) comprend un côté vers l'arrière sensiblement plan (52) et/ou un côté vers l'avant sensiblement plan (53), dans laquelle en particulier le côté vers l'arrière (52) et le côté vers l'avant (53) s'étendent parallèlement l'un à l'autre.

4. Partie plancher de base (1) selon l'une quelconque des revendications précédentes, dans laquelle la marche (9) s'étend dans une direction verticale (V) ou est inclinée par rapport à la direction verticale (V) d'un angle (61) entre 1° et 30°, en particulier d'environ 15°.

5. Partie plancher de base (1) selon l'une quelconque des revendications précédentes, dans laquelle une hauteur de la marche (9) dans une direction verticale (V) est entre 10 mm et 80 mm, de préférence entre 30 mm et 70 mm ou d'environ 60 mm.

6. Partie plancher de base (1) selon l'une quelconque des revendications précédentes, dans laquelle la partie plancher de base (1), en particulier la section horizontale (5), la marche (9) et la section de rangement de fauteuil roulant (7), est fabriquée d'un seul tenant.

7. Partie plancher de base (1) selon l'une quelconque des revendications 1 à 6, dans laquelle la section vers l'avant (5) est sensiblement horizontale et présente un côté supérieur sensiblement horizontal (11) et/ou un côté inférieur sensiblement horizontal (13), dans laquelle la partie plancher de base (1) est conçue de sorte que la section vers l'avant (5) puisse être agencée au moins partiellement au-dessus de la batterie (41) .

8. Partie plancher de base (1) selon l'une quelconque des revendications 1 à 7, dans laquelle un côté inférieur (25) de la section de rangement de fauteuil roulant (7) est incliné du même angle (23) par rapport à la direction horizontale (H) que le côté supérieur (21) de la section de rangement de fauteuil roulant (7).

9. Partie plancher de base (1) selon l'une quelconque des revendications 1 à 8, dans laquelle le côté supérieur (21) et/ou le côté inférieur (25) présentent le même angle d'inclinaison (23) sur toute la longueur de la section de rangement de fauteuil roulant (7).

10. Partie plancher de base (1) selon l'une quelconque des revendications 1 à 8, dans laquelle une longueur de la section de rangement de fauteuil roulant (7) est plus courte que le fauteuil roulant (3), en particulier plus courte que 120 cm, dans laquelle en particulier la longueur de la section de rangement de fauteuil roulant (7) est entre 90 cm et 110 cm, de préférence d'environ 100 cm ou 102 cm, en particulier de sorte que la section vers l'avant (5) soit configurée pour loger un repose-pied (19) du fauteuil roulant (3).

11. Partie plancher de base (1) selon l'une quelconque des revendications précédentes, dans laquelle la marche (9) est formée entre la section de rangement de fauteuil roulant (7) et la section vers l'avant (5), de sorte que la section vers l'avant (5) soit élevée de manière graduelle depuis l'extrémité vers l'avant (29) de la section de rangement de fauteuil roulant (7),
de sorte qu'un angle d'inclinaison de la section de rangement de fauteuil roulant (7) soit réduit par rapport à une partie plancher de base sans une marche (9) .

12. Automobile (10) comprenant une partie plancher de base (1) pour porter un fauteuil roulant (3) selon l'une quelconque des revendications précédentes et une batterie (41) pour fournir au moins une partie d'une force motrice de l'automobile (10), dans laquelle la partie plancher de base (1) est agencée au moins partiellement au-dessus de la batterie (41).

13. Automobile (10) selon la revendication 12, dans laquelle une garde au sol (63) entre le sol (65) et un côté inférieur (67) de la batterie (41) est plus grande que 165 mm, de préférence d'environ 195 mm, et/ou la batterie (41) est agencée dans une position initiale telle que fournie par un fabricant de l'automobile (10) .

14. Automobile (10) selon la revendication 12 ou 13, dans laquelle la partie plancher de base (1) comprend une section vers l'avant sensiblement horizontale (5) située vers l'avant dans une direction longitudinale (L) de l'automobile (10), dans laquelle la section vers l'avant (5) est agencée au moins partiellement au-dessus de la batterie (41).

15. Automobile (10) selon l'une quelconque des revendications 12 à 14, dans laquelle la partie plancher de base (1) est agencée au-dessus de la batterie (41) sur au moins 10 %, de préférence environ 20 %, d'une longueur de la partie plancher de base (1), dans laquelle en particulier la section vers l'avant (5) est agencée au-dessus de la batterie (41) sur au moins 50 %, de préférence au moins 70 % ou au moins 90 %, d'une longueur de la section vers l'avant (5).

16. Automobile (10) selon l'une quelconque des revendications 12 à 15, dans laquelle un côté supérieur (47) de la batterie (41) et au moins une partie d'un côté inférieur de la partie plancher de base (1), en particulier au moins une partie d'un côté inférieur (13) de la section vers l'avant (5), s'étendent parallèlement l'un à l'autre.

17. Automobile (10) selon la revendication 16, dans laquelle un espacement (49) entre le côté inférieur (13) de la section vers l'avant (5) et le côté supérieur (47) de la batterie (41) est entre 5 mm et 15 mm, de préférence entre 8 mm et 12 mm ou d'environ 10 mm.

18. Automobile (10) selon l'une quelconque des revendications 12 à 17, dans laquelle un côté supérieur (21) de la section de rangement de fauteuil roulant (7) est incliné d'un angle (23) inférieur à 12 %, 9 % ou 3 % par rapport à la direction horizontale (H).

19. Automobile (10) selon l'une quelconque des revendications 12 à 18, comprenant en outre une batterie (41) pour fournir au moins une partie d'une force motrice de l'automobile (10) et présentant une forme prédéfinie, dans laquelle un côté inférieur de la partie plancher de base (1), en particulier un côté inférieur (13) de la section vers l'avant (5), et/ou une surface latérale (53) de la marche (9) faisant face à la batterie (41) sont au moins partiellement adaptés à la forme de la batterie (41).

20. Automobile selon la revendication 19, dans laquelle un espacement (55) entre une surface latérale (51) de la batterie (41) et une surface vers l'avant (53) de la marche (9) faisant face à la batterie (41) est entre 5 mm et 15 mm, de préférence entre 8 mm et 12 mm ou d'environ 10 mm.
